# EUROPEAN PATENT APPLICATION

(11) **EP 1 612 755 A2**
(43) Date of publication of application: **04.01.2006**
(21) Application number: 05300514.6
(22) Date of filing: 27.06.2005
(51) Int. Cl.: G08B 21/04, G08B 21/22

(54) **Activity monitoring systems and methods**

(30) Priority: 28.06.2004 US 878083
(71) Applicant: ALCATEL, 75008 Paris (FR)
(72) Inventor: KRSTULICH, Zlatko, K2A 2V4, Ottawa (CA)
(74) Representative: Hervouet, Sylvie

(57) **Abstract**

Systems and methods of monitoring activity are provided. Activity at a subscriber location is determined using data which is accessible to a provider of a product or service to track the provision of the product or service to a subscriber at the subscriber location. The product or service may be provided to subscriber premises, such as utility products provided to a subscriber's home or office, or to equipment such as a mobile telephone which is associated with the subscriber.

## Description

### Field of the Invention

The present invention relates to activity monitoring systems and methods, and in particular to systems and methods for monitoring activity of individuals.

### Background of the Invention

Various home monitoring systems exist for monitoring abnormal events in a home such as a fire, a break-in or high levels of toxic gases such as carbon monoxide. On detection of such an event, the system sounds an alarm installed in the home and may also transmit an alert message to a manned monitoring station. On receiving the alert message, personnel at the monitoring station may at first attempt to contact the home by telephone to determine whether the home owner is present before calling the appropriate emergency service. In addition to door and window contact sensors, home monitoring systems often include motion detectors positioned within certain rooms of the home for detecting the presence of an intruder. A home monitoring system which uses programmable ultrasonic sweep sensors to automatically detect a person crossing into a protected area and which also employs dry contact sensors such as contact switches for doors and windows is disclosed in U.S. Patent No. 5,781,108 (Jacob et al).

Another home monitoring system is described in U.S. Patent No. 6,583,720 (Quigley) and includes a command console connected to various alarms, sensors and utility meters within the home, analyzes the information received from the various sensors and measurement devices, and based on the analysis, transmits warning messages to a customer service center. The sensors are used to measure various conditions within the home such as temperature or the presence of carbon monoxide. The command console receives readings from gas and electricity meters and sends the readings to a central station for processing. Electricity meter readings may also be used to check that appliances are operating normally, and gas meter readings may be used to detect a gas leak. The command console can also be implemented as a prescription reminder system to remind patients to take pharmaceutical drugs at prescribed times.

Home monitoring systems are also used to monitor patients or people living alone to alert a third party when an abnormality is detected. An example of such a system is disclosed in U.S. Patent Publication No. 2003/0117279 and performs a statistical analysis on data from detectors placed within a household capable of detecting small movements a person. An abnormality is detected when measured movement deviates from an expected pattern, and is reported to a remote monitoring center and to the cell phone of a registered contact, via a communications network. Another system for monitoring an unsupervised person, as described in U.S. Patent Publication No. 2002/0171551, uses video cameras and audio sensors to measure movement and sounds of a person living at home. A computer analyzes video and audio data to detect alarm conditions which may be derived from either simple or complex changes in behaviour.

Another example of an in-home surveillance system is described in U.S. Patent No. 6,559,766 (Mohri). The system comprises duplex communication equipment installed at a cable television station, and a domestic cable modem installed in a contracting home. The cable modem is connected to a lifestyle utility meter for measuring the integrated amount of electrical energy, the integrated amount of gas flow, and the integrated amount of water flow into the home. The cable modem is capable of internet protocol communication as well as relaying cable television broadcasts. The in-home surveillance system performs automatic reading of lifestyle utility usage data for transmission through the internet to a first center. The in-home surveillance system also detects unusual developments signified by changes in the integrated amount of electrical energy, the integrated amount of gas flow, or integrated amount of water flow, or indicated by cable television broadcast reception or access to the internet, and the cable modem transmits an indication of the unusual development to a second center. For example, automatic detection of the occurrence of an occupant's illness or an emergency is detected by checking whether the integrated amount of electrical energy, the integrated amount of gas flow and the integrated amount of water flow do not increase in the automatic reading of a fixed period and whether the cable television reception or access to the internet is abnormally sparse.

A drawback of these known monitoring and surveillance systems is that they all require special equipment, such as lifestyle utility meters, ultrasonic sensors, dry contacts, carbon monoxide detectors and motion detectors to be installed in the monitored home. In addition, these systems require special communication equipment, installed in each home, adapted to receive signals from the meters and sensing devices and is specifically configured to transmit information based on these signals to a monitoring centre. For example, in the system of U.S. Patent No. 6,559,766 (Mohri), the cable modem is especially adapted to transmit this and other information regarding TV and internet usage to a monitoring centre. To send this usage information, the cable modem must include special associated equipment to generate specific communication signals including an identification of the particular home being monitored and addressed for transmission to the monitoring centre and which. All of these special devices represent additional cost, sales and installation complexity that would be desirable to avoid.

### Summary of the Invention

According to one aspect of the present invention, there is provided a system for monitoring activity at a subscriber location, comprising data receiving means for receiving data accessible to a provider of a product or service to track the provision of the product or service to a subscriber at said location, and determining means for determining from the data activity at said subscriber location.

The subscriber location may be a subscriber's home, office, or other premises, or more generally the current location of a subscriber, whether or not at any specific premises. Therefore, activity monitoring in accordance with embodiments of the invention is in no way restricted to monitoring particular premises. Activity of a subscriber may be monitored at virtually any location by monitoring data associated with services or products provided to a mobile telephone or other mobile device, for example, associated with the subscriber.

Advantageously, in one arrangement, activity is monitored using data which is generated in the provisioning of a product to a subscriber or from the use of a service by a subscriber and which is available to the product or service provider so that special activity monitoring equipment installed at the subscriber premises is not required. Embodiments of the invention are predicated on the recognition that product and service providers collect information relating to the consumption or use of products and services by each subscriber and exploits this information to monitor activity at a subscriber location. For example, in the case of a telephone service (fixed or mobile), signals such as dialing or call set-up requests are generated and recorded for billing or other purposes each time a subscriber initiates a call. Similarly, other events or information relating to telephone calls such as caller identification and the end of a telephone session are also detected and recorded and may be used by the service provider for billing (or other) purposes. Further events such as call set-up requests to a subscriber telephone and whether or not the telephone is answered (by detecting an off-the-hook condition) or the transfer of the call to voicemail, may also be detected and recorded. Embodiments of the present invention use information based on signals resulting from telephone calls made from and directed to subscriber equipment to determine activity of the subscriber and/or at the subscriber location. Advantageously, in the case of a mobile telephone or other mobile device for multimedia such as a mobile television display, call information can be used to monitor activity of an individual associated with the mobile device independently of their location.

In embodiments of the present invention, information available to a television or video service provider resulting from interactions with a subscriber may be used to measure activity at the subscriber location. For example, in an interactive television service, each time a subscriber manipulates video signals by changing channels, pausing video playback, or selecting video signals, for example, these changes or selections are detected by equipment used by the service provider and are recorded for tracking, billing or other purposes. Any of these and possibly other manipulations may involve signalling to a service provider in some systems such as video over DSL or other limited-capacity media. In another example, each time a subscriber orders a film or other program on a pay-per-view basis, a request message is sent from the subscriber equipment to the television station and the channel carrying the program is enabled in response thereto. The subscriber request message, a provider receipt confirmation message and the enablement of the channel or program are recorded and available to the service provider for tracking programs requested and transmitted to a subscriber and for billing or other purposes. Embodiments of the present invention make use of this information to monitor activity at the subscriber location.

Embodiments of the present invention may monitor activity of a subscriber or at a subscriber premises from information relating to internet usage collected by an internet service provider (ISP). Such information may include data relating to times when the internet is accessed (e.g. by means of a user log-on), when an internet session is terminated (e.g. by a user log-off) or times when an internet text messaging service such as e-mail or instant messaging is used. In the case of e-mail, the data may include times when an e-mail message is sent, an e-mail folder is accessed or otherwise manipulated or an e-mail is read.

In embodiments of the present invention, activity at a subscriber location may be monitored using information available to utility companies relating to the supply of utility products such as electricity, gas and water to a subscriber. At a subscriber premises, a utility meter used by the utility company to measure the amount of product supplied to the premises transmits measurements (meter readings) to the company on a regular (e.g. near real time) basis to track the amount of product used. For example, a plurality of measurements may be transmitted within the period of one day to enable the utility company to monitor daily usage patterns, and peak usage times. Embodiments of the present invention use this available information to measure activity at a subscriber premises. Advantageously, since this information is already collected by utility companies from existing meters and stored in and available from existing databases, no additional equipment, such as lifestyle utility meters, is required at the customer premises.

The terms "product" and "service" as used herein are not in any way limiting of any particular product or service, nor are these terms used in a way which attributes different meanings to these terms, and where appropriate, these terms can be used interchangeably. For example, the provision of data to subscriber equipment whether it be video, voice, text or other data may be referred to as the provision of a product or a service. However, the term product may be considered more appropriate when referring to physical products such as electricity, gas, water or other consumer products that may be supplied to a subscriber or subscriber equipment. Accordingly, the terms service and product embrace anything that a provider could provide to a customer.

Embodiments of the invention are not limited to any particular media over which a product or service is provided or supplied. For example, telephony services may be provided over any media including POTS (plain old telephone service), wireless, internet or others and video services may be provided over any media such as DSL, cable, wireless (e.g. satellite), internet and others. Embodiments of the present invention can monitor activity of a subscriber based on any use of equipment which is within the domain of or associated with the subscriber whether the equipment is at the subscriber premises or elsewhere. In the latter case, activity may be monitored by use of any equipment that can be moved from the subscriber premises including portable equipment and any other mobile equipment which is not necessarily portable, or equipment which is closely associated with the subscriber but is at another location. Thus, as described above, subscriber activity monitoring is not restricted to particular premises. Mobile equipment, for example, associated with the subscriber enables monitoring of activity at virtually any subscriber location.

Embodiments of the present invention analyze activity information and determine an amount of deviation from or change in an expected level of activity or activity pattern. If the deviation or change meets a predetermined criterion, a message or other signal may be sent to an appropriate party. For example, in one embodiment, when a significant change or deviation occurs which meets the predetermined criteria, a "challenge" signal may be sent to the subscriber seeking a response from the subscriber to establish whether assistance is required. If no response is received or is not detected within a predetermined time interval from sending the signal challenging the subscriber, a message may be sent to one or more other parties to inform them of the situation so that they may take appropriate action.

The activity monitoring system is particularly beneficial for monitoring people who live alone, such as an elderly person, or an unsupervised child. Embodiments of the present invention are not limited to monitoring any particular personnel and the term subscriber or customer may include either an individual person or a group of people.

### Brief Description of the Drawings

Examples of embodiments of the present invention will now be described with reference to the drawings, in which:
Figure 1 shows a schematic diagram of an activity monitoring system according to a first embodiment of the present invention;
Figure 2 shows a schematic diagram of an activity monitoring system according to a second embodiment of the present invention;
Figure 3 shows a schematic diagram of an activity monitoring system according to a third embodiment of the present invention;
Figure 4 shows a flow diagram of an implementation of an activity monitoring method according to an embodiment of the present invention; and
Figure 5 shows a flow diagram of an implementation of an activity monitoring method according to another embodiment of the present invention.

### Description of Embodiments

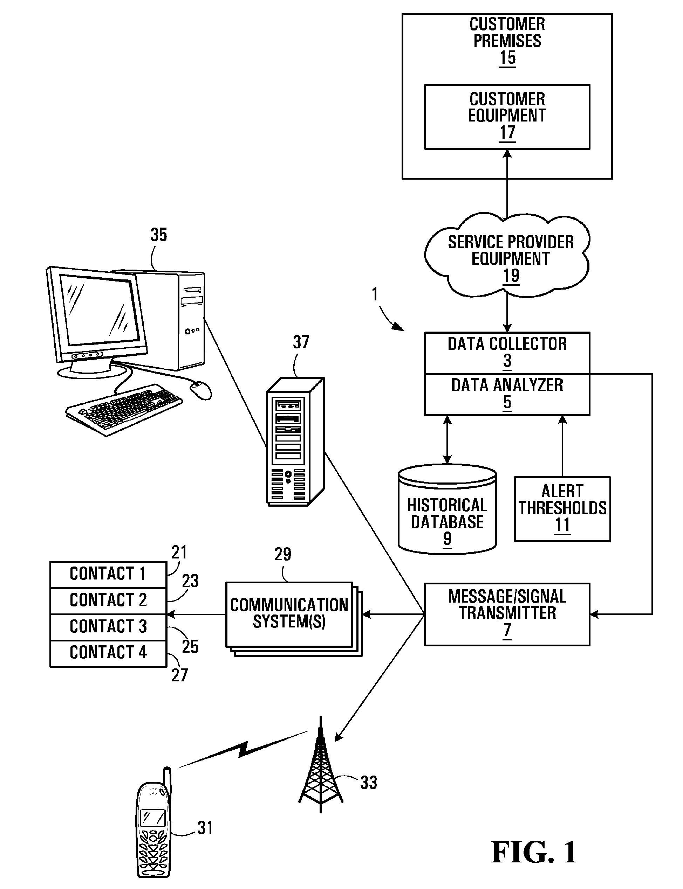

Referring to Figure 1, an activity monitoring system 1 according to an embodiment of the present invention comprises a data collector 3 for receiving data accessible to a provider of products or services to track the supply of the products or services to a subscriber location, and a data analyzer 5 for determining, from the data, activity at the subscriber location. The system 1 further includes a transmitter 7 for sending a message to one or more intended recipients based on the level of activity determined by the data analyzer 5. For example, if the analyzer determines that no activity has occurred within some predetermined time interval, the transmitter 7 may be activated to transmit a message or other signal. In one instance, the signal may be sent to a receiving device of the subscriber being monitored as a challenge, and if no response is detected, an alert message/signal may be transmitted to another party. The system 1 may include a historical database 9 which stores data relating to past supply or use of the product or service by the subscriber and may be used by the data analyzer 5 to determine whether current use of the product or service by the subscriber falls within expected levels as determined from the historical data, or deviates significantly therefrom, in which case the data analyzer may determine that a message/signal should be sent.

The activity monitoring system 1 may also include a record of alert thresholds, which may be used by the data analyzer to determine whether or not a particular deviation in determined activity warrants the transmission of a message. For example, different alert thresholds may be applied at different times, for example, for different time periods during the day, week or month.

As shown in Figure 1, the activity monitoring system 1 is arranged to monitor activity within a customer premises 15 based on information relating to the use of customer equipment 17 at the premises which is available to a provider of products or services with which the customer equipment interacts. For example, in the case of a communications service, information which is indicative of whether a person is actively using the service is provided to equipment 19 used by the provider in providing the service and is subsequently made available to the data collector 3 of the activity monitoring system 1. Similarly, in the case of a product provider such as utility products, e.g. electricity, gas or water, information relating to the consumption of the product at the customer premises is made available to the provider and this information is subsequently passed to the activity monitoring system for analysis.

Non-limiting examples of particular applications for which the activity monitoring system may be used are described below.

In one application, the activity monitoring system monitors activity at a customer premises based on use of telephone equipment. Each time a telephone call is initiated at the customer premises, a call set-up request or equivalent is sent from the customer telephone to equipment used by the service provider to establish a connection between the customer telephone and that of the intended recipient. Signals may be passed between various elements of the telephone network depending on the messaging protocol used to set up a connection. Thus, the initiation of a telephone call at the customer premises triggers one or more events involving service provider equipment, any of which may be indicative of the attempted call, and therefore activity at the customer premises. Information relating to any one or more of these events may be provided to the activity monitoring system. Other information relating to the telephone call, such as whether or not the call was answered by the intended recipient, whether the call was deferred to voicemail or automatically forwarded to another receiver, the duration of the call, and/or termination of the call, which is available from service provider equipment, may be provided to the activity monitoring system.

Information relating to telephone calls made by a subscriber may be recorded or logged by service provider equipment for use by the service provider, for example, for monitoring performance and/or quality of the service, for network management and for customer billing. Any of this information (or other information which is received by or resides in service provider equipment) that signifies that an attempted call was made from a customer premises being monitored may be provided to the activity monitoring system. Such information may be provided to the monitoring system in real time, or the information may be supplied to the activity monitoring system from information previously recorded in service provider equipment, and supplied to the monitoring system at regular intervals and/or responsive to requests by the monitoring system.

Another indication of activity within the customer premises is the response at the customer premises to an incoming telephone call, and information indicative of the response may be provided to the activity monitoring system. Indicators of the customer response which may be available to the service provider may include detection of a completed connection, detection of an off-the-hook condition, detection of a call termination, detection of a connection being passed to voicemail or forwarded to another receiver unit, a failed connection, the number of rings and the call duration. Any of this information may be available to the service provider for call logging and billing purposes or management of the service.

In another application, the service provider provides a video service, such as television programming, and the customer premises includes equipment capable of transmitting signals to the video service provider. For example, the customer equipment may include a transceiver (e.g. television set top box) which receives and relays video signals from the video service provider to a television display, and which receives signals from a user input device, such as a remote controller, and transmits signals/messages in response thereto to the video service provider. Such a system is used to enable the selection of a TV channel, the ordering of a movie or other video or any other manipulation of a video stream involving signalling from the user to the service provider. For example, signalling from the user to the service provider in Video-on-Demand (VoD) or Pay-per-View services provides for the selection movies or other programs for delivery at particular times. Each time a customer orders a service (e.g. by pressing an appropriate key or keys of the user input device) or manipulates a video stream in any way, a request message for that particular service or video stream manipulation which may include a channel change or video pause, for example, is transmitted from the customer transceiver to a receiver within the video service provider's domain for subsequent processing. For example, on receipt of a valid request, the service provider may transmit a decryption key to enable the video stream in a selected channel to be decoded for viewing. Receipt of the request message or the video service provider's response thereto provides an indication of activity within the customer premises. Data relating to the request is typically recorded by the video service provider (for example, in a database or other data recording medium) and used in the provisioning of the requested service or manipulation, for billing purposes and possibly for market research purposes.

In another example, a video service provider may deliver video over DSL (Digital Subscriber Line) which, due to its limited bandwidth relative to cable, typically carries one or two channels simultaneously. To provide a wide range of channels, a video stream containing multiple channels is supplied to a DSLAM box located in the neighbourhood of subscriber premises and switches a selected channel or channels into the subscriber wireline in response to channel selection signals transmitted from the user equipment. The channel selection signals or the response of the service provider equipment thereto provides an indication of activity of the subscriber and/or at the subscriber premises.

In another example, the activity monitoring system may monitor activity based on information collected by or available to a video service provider relating to use of a Network Personal Video Recorder (PVR) or customer premises-based PVR which can provide a video service provider with information on television usage.

Any information which signifies that a service request has been transmitted from the customer premises indicates activity within the customer premises and may be provided to the activity monitoring system. This information may include the service request itself or any response thereto from the video service provider, for example, a service request receipt confirmation message or any indication relating to the actual transmission of the requested service. Such information may be provided to the activity monitoring system in real time, or a record of such information may be provided to the monitoring system at some later time, at regular intervals, or responsive to requests from the activity monitoring system. The absence of such information during a predetermined time interval may also be interpreted by the data analyzer as a significant variation from an expected pattern sufficient to warrant the dispatch of a message.

In another application, the service provider provides internet services and the customer equipment includes one or more internet access and communications device such as a modem or similar device which may be connected to a computer such as a PC, laptop, a Voice Over Internet Protocol (VOIP) transceiver device or internet gaming device. During internet communications, signals are passed from the subscriber communications device to a server of a service provider and signals responsive thereto are sent from the server to the subscriber device. These signals indicate human activity within the customer premises and the signals or information relating to these signals may be used by the activity monitoring system to detect and monitor activity at the customer premises. These signals may include internet access request messages sent from the subscriber device to the server of the internet service provider when initially starting an internet communications session, signals responsive to the access request generated by the server and any subsequent signals prompted by the internet user in browsing, accessing different web sites, requesting and downloading information, and terminating an internet session. Internet activity that may be relatively easily monitored includes logging on and off an internet server, accessing mail servers, and opening, sending and manipulating mail, instant messages, or "chat" text. Some service providers offer internet access limiting systems, and provide a log-on screen, requiring entry of a password, to permit access to certain websites or services. Such systems may be used for parental filtering to limit internet access by a child, or to access chat sites or discussion groups. Use of the access limiting log-in screen is also readily detectable, and this use information may be used by the activity monitoring system to monitor activity of a person. If using VOIP, the signaling between service providers may include signals any that are indicative of a call initiated at subscriber equipment or its response to an incoming call, and may include any signals analogous to those used in conventional telephone communications systems, for example those described above. Information relating to the various message exchanges between the server and subscriber device and initiated from the subscriber device is recorded by the server or other equipment used by the service provider and made available to the data collector and data analyzer of the activity monitoring system. The monitoring system may be arranged to check whether internet communication has taken place within a predetermined time period, and if not, may decide to transmit a message to one or more designated receivers.

In one implementation, the activity monitoring system may send messages in response to detecting activity within the customer premises, for example, if activity is detected within a predetermined period of time and/or relates to a particular device or type of device within the customer premises. For example, the activity monitoring system may be arranged to monitor when a child returns home from school by receiving from an internet service provider an indication that the internet or an internet specific service has been accessed from a subscriber internet communications device. This may include access to an internet site by logging on via an access-limiting login screen, as described above. This event would signify that the child has returned home and is using the device. The activity monitoring system may be arranged to send a message indicative of the event to one or more receiver(s) to inform a parent, guardian, caregiver or other person that the child has returned home safely. The activity monitoring system may also or instead be arranged to send a message indicative of the fact that the child has failed to return home at an expected time if no activity is detected within a time window of the expected time.

In another application, the provider may be a provider of utility products such as electricity, gas or water and the customer equipment comprises a meter for measuring the quantity of product supplied and for transmitting this information to the provider. Such information may be provided in real time on a continuous basis, or may be provided periodically but at a frequency which is sufficient to provide meaningful data on activity within a customer premises within a desired time period. For example, when a customer premises is occupied, electricity is generally consumed each day, and therefore a daily change in the meter reading would be expected. Therefore, one meter reading per day would provide some indication as to the level of activity within a customer premises over a twenty-four hour period. More information relating to activity within the customer premises could be obtained by providing meter readings on a more regular basis to resolve variations in electricity usage during a daily period. For example, electricity consumption may increase at certain times of the day due to the use of high load appliances, such as washing machines, tumble dryers and cookers, and whose start of operation requires conscious action by a member of the customer premises. Information relating to the meter readings may be provided to the activity monitoring system which then analyzes the data and determines whether or not to transmit an alert or other message or signal.

Water and gas usage are also useful indicators for determining activity within a customer premises. For example, water is generally only consumed in response to action taken by a member of the household, for example, in running a tap, setting a dishwasher or washing machine, taking a shower or running a bath. In one embodiment, a water meter at a customer premises measures the amount of water supplied and transmits readings to the utility company. Water meter readings received by the water utility company from the remote meter may be provided to the activity monitoring system for analysis and to determine whether or not to send a message/signal to one or more designated receivers.

Information may be supplied to or obtained by the activity monitoring system using any one or more of a number of different methodologies. In one implementation, the provider equipment is adapted to transmit information to the data collector automatically, i.e. without any prompts such as polling or download request signals from the activity monitoring system. The information passed from the provider equipment to the data collector may be limited only to that data which is required by the monitoring system to make activity level determinations, in which case the provider equipment may be adapted to select and transmit only specific data. Alternatively, the provider equipment may be adapted to transmit to the activity monitoring system raw data which includes data required by the monitoring system to make activity determinations, and other information which is not required. The data collector 3 may be adapted to select from the raw data only that data which is required by the data analyzer and to discard or otherwise dispose of information which is not needed. Alternatively, the data selection process may be performed partially by the data collector and partially by the data analyzer or performed solely by the data analyzer.

In another implementation, data may be transmitted from provider equipment to the data collector under the control of the activity monitoring system, for example, in response to signals such as polling or download request signals transmitted from the activity monitoring system. Again, the data transmitted from the provider equipment to the data collector may contain only that data which is required by the activity monitoring system or may comprise raw data, as described above.

In one implementation, data relating to the use of a service or supply of a product is collected and stored in a proprietary database of the service or product provider. An activity information selector, which may be implemented as a software application, may access the database and select specific information from which activity in each monitored customer premises may be determined. A sorting process may be applied to the data (for example by a sorting algorithm) in which, for example, data is sorted on a per customer or per customer premises basis and optionally, for each customer or customer premises, data may be further sorted into subgroups, for example according to the particular service used, the type of use and/or according to different time segments. The selected information may then be transmitted to the activity monitoring system for analysis.

In one embodiment, in the initial stages of monitoring activity associated with a new customer premises, the activity monitoring system collects activity information over a period of time and "learns" one or more expected or typical patterns associated with the customer premises. Each activity pattern extends over a predetermined time and each pattern may be different for each time interval. For example, activity within the customer premises may vary from one day to the next but repeat within a certain time period, for example within the same week or repeat on a weekly basis. One or more "learned" activity patterns may be stored in the historical database for comparison with current data by the data analyzer.

Referring again to Figure 1, the transmitter 7 of the activity monitoring system 1 transmits messages to one or more designated receiver in response to control or command signals from the data analyzer 5. The transmitter 7 stores contact information for each receiver device of a party which is to receive transmissions from the activity monitoring system 1. The contactable parties may include the subscriber, to whom the activity monitoring system 1 may send a challenge message before contacting any other party, and one or more trusted/authorized parties to whom the activity monitoring system may send a message, such as an alert message, depending on any response received from the subscriber or the absence of a response. Depending on the type of receiver device, the contact information may include any one or more of telephone numbers, mobile numbers, pager numbers, e-mail addresses and SMS text messaging addresses, as well as others. The transmitter 7 may be arranged to transmit messages to a plurality of receiver devices either simultaneously or at different times. In the embodiment shown in Figure 1, for the subscriber premises 15 the transmitter 7 is capable of transmitting messages to one or more of receivers 21, 23, 25, 27 via one or more communication paths or systems 29 illustratively including a public switched telephone network (PSTN), for example, to one or more mobile telephone receiver(s) 31 via a cellular telephone network 33 and to one or more internet communications receiver(s) (e.g. a computer) 35 over the internet, represented at 37.

Embodiments of the activity monitoring system may be adapted to first try to contact the subscriber being monitored before attempting to contact any other party. For example, once the monitoring system determines from the activity information that a message/signal should be sent, the transmitter may send a message/signal to a subscriber device, prompting the subscriber to respond by transmitting a return message, for instance, to the monitoring system 1. The response request message, also referred to herein as a challenge message, sent from the transmitter 7 may simply request a response which indicates that the subscriber actively responded to message, or may include one or more questions relating to the subscriber status. The response request message/signal may be presented to the subscriber by the subscriber device in any suitable form, which may include visual, audio and/or tactile indicators.

In this embodiment, the activity monitoring system 1 may be adapted to detect a response from the subscriber. The response may have any suitable form that allows its detection by the activity monitoring system, and may be conveyed to the monitoring system by any suitable method and over any desired medium. For example, the response may be a voice or text message specifically addressed to the activity monitoring system 1, and conveyed over any communications medium. The response message may contain information that can be used by the activity monitoring system 1 to determine what action to take next.

In another example, the response may simply be an action by the subscriber involving the use of a service or product which is detectable by the service or product provider, and which is made available to the activity monitoring system 1 by the provider to monitor activity of the subscriber or subscriber premises, as for example described above. In this case, the subscriber would not need to transmit a special response to the activity monitoring system 1, but for example would only need to change a TV channel, log-on to the internet, or make a telephone call (to anyone), to generate a detectable response and this may be more convenient and less intrusive to the subscriber.

The activity monitoring system 1 may be arranged to wait a predetermined length of time for a response from the subscriber after a response request signal/message has been transmitted to the subscriber. If a response is detected, the activity monitoring system 1 may determine that no further action, such as the transmission of an alert message to another party, is required. On the other hand, the activity monitoring system 1 may determine from the response that further action is required such as the transmission of a message to another party, and may transmit the message. If no response is detected within the predetermined period of time following transmission of the response request message to the subscriber, the activity monitoring system 1 may determine that a message should be sent to one or more other parties and transmit the appropriate message or messages.

In one embodiment, the transmitter 7 may be adapted to transmit different messages depending on the activity determined by the data analyzer 5, so that different messages can be transmitted to the designated receiver devices, depending on the particular circumstances. For example, different messages may be sent depending on the level of activity, the amount of deviation of present activity relative to an expected norm, or the subscriber equipment from which the activity information is being detected by the activity monitoring system 1. At another level of sophistication, the transmitter 7 may be adapted to transmit different messages/signals depending on the particular receiver device. For example, messages may contain different information for different devices. The transmitter 7 may be adapted to select for transmission of a message, one or more receiver devices from a number of possible receiver devices with which the transmitter 7 can communicate. For example, the transmitter may store information relating to times of the day when a particular receiver device will not be in service or available to a particular party, such as a subscriber or a trusted/authorized party, or may be adapted to select one or more particular receiver devices depending on the activity determined by the data analyzer 5. For instance, the data analyzer 5 may transmit different command signals to the transmitter 7, depending on its determination of activity at the customer premises, which control the selection of a particular receiver device or devices to which a message is to be sent.

The activity monitoring system 1 may be adapted to select from a number of different possible receiver devices, the receiver device or devices through which a particular party is most likely to be contactable at a particular time. For example, the activity monitoring system 1 may select the receiver device based on the receiver device which was most recently used by a particular party, whether it be a wireless telecommunications device, a fixed telephone or the internet. This information may be made available to the activity monitoring system 1 by one or more service providers and may be made possible by the so called "follow-me" technology which is currently being developed, in which information on use of different services by different end-user devices of a subscriber is shared.

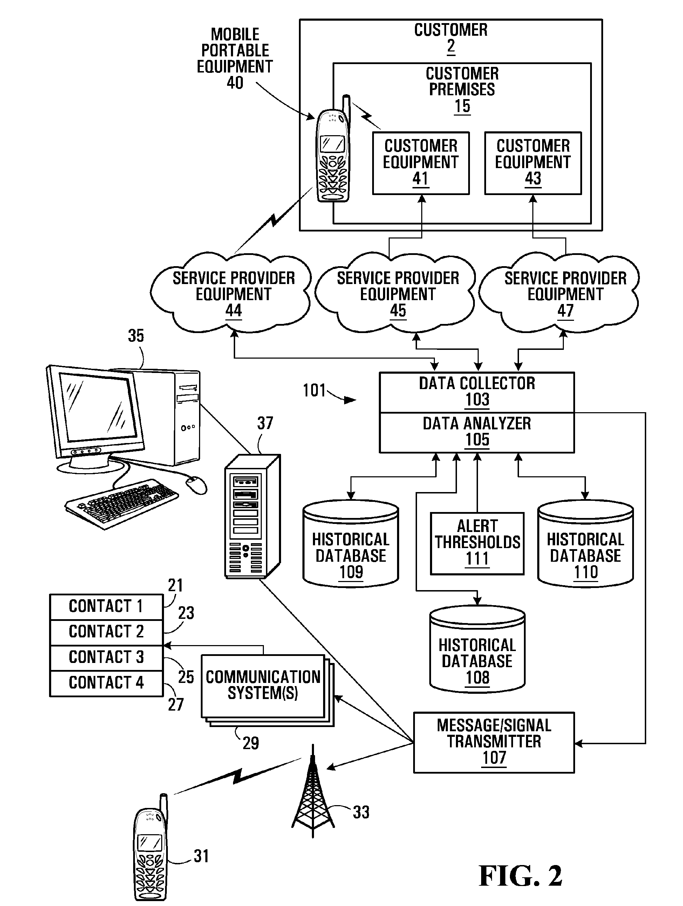

Embodiments of the activity monitoring system 1 may be adapted to monitor activity of a subscriber based on the subscriber's usage of any equipment that is closely or strongly associated with the subscriber and therefore may be used to monitor activity of a subscriber when the subscriber is either at or away from the subscriber premises. For example, activity information may be derived from information from a service provider relating to the use of a portable communications device such as a mobile telephone or other wireless device, or a laptop computer. In another embodiment, there may be one or more devices closely associated with the subscriber at locations other than the subscriber premises which allow the activity monitoring system to monitor activity of the subscriber. For example, activity information may be derived from usage of one or more communications devices such as a telephone or computer at the subscriber's place of work, or activity information may be derived from usage of communications equipment installed in a vehicle such as a land vehicle, boat or aircraft associated with the subscriber. Usage of this equipment is detected and tracked by the service provider, for example for billing purposes, and this usage information is made available to the activity monitoring system to determine activity of the subscriber. An example of such an arrangement is shown in Figure 2 and is described below.

Embodiments of the activity monitoring system 1 may be adapted to monitor activity based on information relating to two or more devices of the same or different type installed in the customer premises. For example, a telephone service provider may provide information to the activity monitoring system relating to the use of two different telephone receivers or telephone lines, a mobile telephone service provider may provide information relating to the use of two or more mobile telephones used by one or more members of the customer premises, an internet service provider may provide information to the activity monitoring system relating to the use of two or more internet communications devices, and/or a video service provider may provide information to the activity monitoring system 1 relating to the use of two or more television receivers within the customer premises.

Often different service providers provide different services to a customer premises, so that, for example, the service provider which provides telephone services to the customer premises is different to that which supplies television programming or internet services. Embodiments of the activity monitoring system 1 may be adapted to receive information from two or more different providers of services or products to increase the amount of information available to the monitoring system and therefore the degree of resolution and accuracy to which a level of activity of the subscriber or in the customer premises can be measured. For example, if a person is not using the telephone, he or she may be using the internet, or may be watching television, and information relating to the usage of two or more of these devices may be supplied to the activity monitoring system. An example of an activity monitoring system which is adapted to receive usage information from two or more service providers is shown in Figure 2.

Referring to Figure 2, the activity monitoring system 101 is adapted to monitor activity of a customer whether at or away from the customer premises 15 by monitoring usage of mobile equipment 40 associated with the customer 15 and also usage of equipment at the customer premises. In Figure 2, the customer is represented by the outer box 2, surrounding the inner box 15 which represents the customer premises, although activity monitoring as described herein is in no way limited to a situation in which a customer's location is coincident with the customer premises 15, or any other premises.

The mobile communications device 40, which may comprise a mobile telephone, communicates with equipment 44 owned, operated or used by a mobile service provider in providing a service, or may communicate with other customer owned equipment within the customer premises (such as a wireless hub) using wireless communication links. In the former case, information received by the equipment 44 relating to usage of the mobile telephone (or other device) 40 is passed to the data collector 103 of the activity monitoring system 101. This information may be used by the activity monitoring system 101 to monitor activity of the customer when either at or away from the customer premises 15.

The customer premises 15 includes a plurality of customer equipment 41, 43, which for the purposes of illustration may comprise communications devices such as a telephone receiver (e.g. connected to a POTS line) and an internet communications device, respectively. The telephone receiver 41 communicates with equipment 45, which may be owned, operated or used by a telephone company in providing telephone service, and information received by the equipment relating to usage of the telephone receiver 41 is passed to the data collector 103 of the activity monitoring system 101. Similarly, the internet communications device 43 communicates with equipment 47 owned, operated or used by an internet service provider in providing the service and information relating to use of the internet communications device is also passed to the data collector 103 of the activity monitoring system.

Information may be supplied to or obtained by the activity monitoring system 101 using any one or more of a number of different methodologies, as for example described above with reference to the embodiments of Figure 1.

In this embodiment, the activity monitoring system 101 includes a first historical database 108 which stores data relating to typical, expected or past use of the mobile communications device 40, for use by the data analyzer 105 as a reference for comparison with current data to determine whether or not activity associated with the mobile device 40 is within normal levels and whether further action should be taken by the monitoring system 101. The activity monitoring system 101 includes a second historical database 109 which stores data relating to typical, expected or past use of the telephone receiver 41, which the data analyzer 105 uses as a reference for comparison with current data in order to determine whether or not present telephone activity is within normal levels and to take appropriate action based on the determination. The activity monitoring system 101 also includes a third historical database 110 which stores information relating to typical, expected or past usage of the internet device 43, which is also used by the data analyzer 105 for comparison against current levels of internet use to determine whether or not present internet use at the subscriber location is normal, and to determine whether a message is to be sent from the system transmitter 107. The activity monitoring system also includes a record 111 of alert thresholds, and may include any one or more of (1) one or more general activity threshold levels, (2) one or more threshold levels specific to use of the mobile device 40, (3) one or more threshold levels specific to telephone use and (4) one or more threshold levels specific to internet use, and/or other thresholds.

The transmitter 107 is responsive to the data analyzer 105 for transmitting messages, such as response request (challenge) or alert messages to one or more designated communications receivers, and may operate in a similar manner to the transmitter 7 described above in connection with Figure 1.

The activity monitoring system 101 may be operated by the same provider of services or products that provides a service or product to the monitored subscriber premises, or the activity monitoring system 101 may be operated independently. In the former case, the activity monitoring system 101 may reside with other equipment used by the service provider, and may be adapted to receive information from other service providers. In either case, in order to protect the privacy of the subscriber whose premises is being monitored, the information provided to the monitoring system by external service provider(s) may omit sensitive information such as the identification of called telephone numbers, billing data, an identification of selected video services such as television programs or movies, e-mail addresses, message text, web site addresses (URL numbers) and/or other sensitive information. Advantageously, omitting this information may also reduce the data overhead when transmitting this information from the service provider to the activity monitoring system.

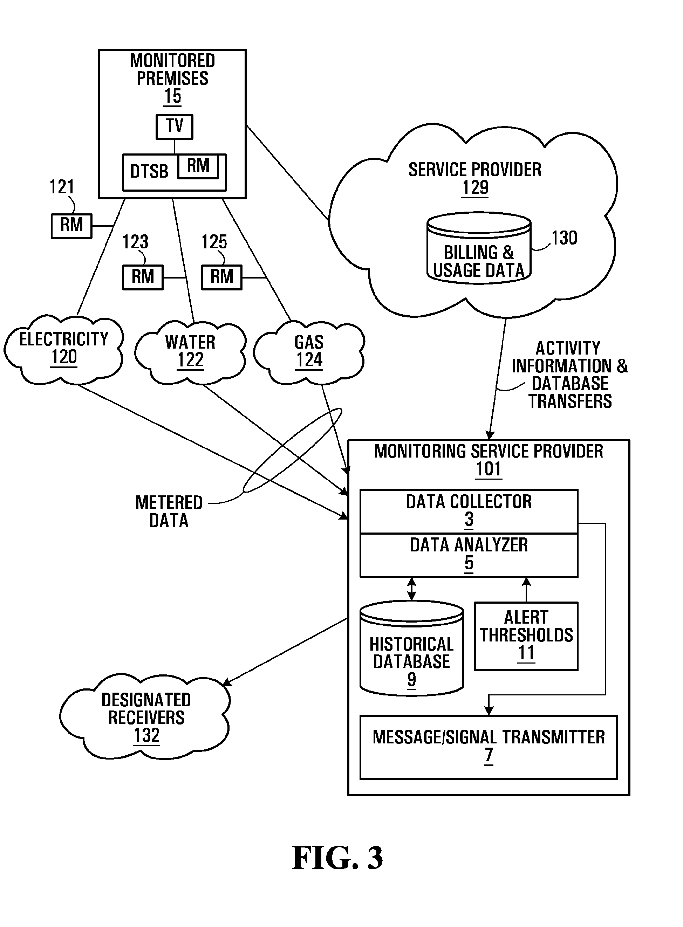

Figure 3 shows another embodiment of an activity monitoring system which receives information from a plurality of sources, including one or more utility product provider(s) and information relating to use of a plurality of services which may be provided by one or more service provider(s). The activity monitoring system is similar to that shown in Figure 1, and like features are designated by the same reference numerals. Information which resides on service provider equipment such as a database 130 for storing billing and usage data is transmitted to the activity monitoring system 101. This information may include information from broadband and/or narrow band services, including telephone (POTS, wireless or VOIP), video services (DSL), cable or satellite e.g. interactive TV, internet access, gaming, two way video and/or others. In this embodiment, the activity monitoring system 101 also receives information which resides in utility company equipment 120, 122, 124 such as a database, relating to times and amounts of the product supplied to the subscriber premises, as measured by a remote meter 121, 123, 125. Information on the use of services and the supply of utility products is transmitted to the activity monitoring system 101 which analyzes the data and determines if a message should be sent to one or more designated receiver devices. In this embodiment, service information is supplemented by utility product information which advantageously increases the resolution and accuracy to which activity may be detected and monitored at a customer premises. The activity monitoring system 101 may be implemented and may function in a similar manner to any of the embodiments described herein, for example with reference to Figures 1 and/or 2.

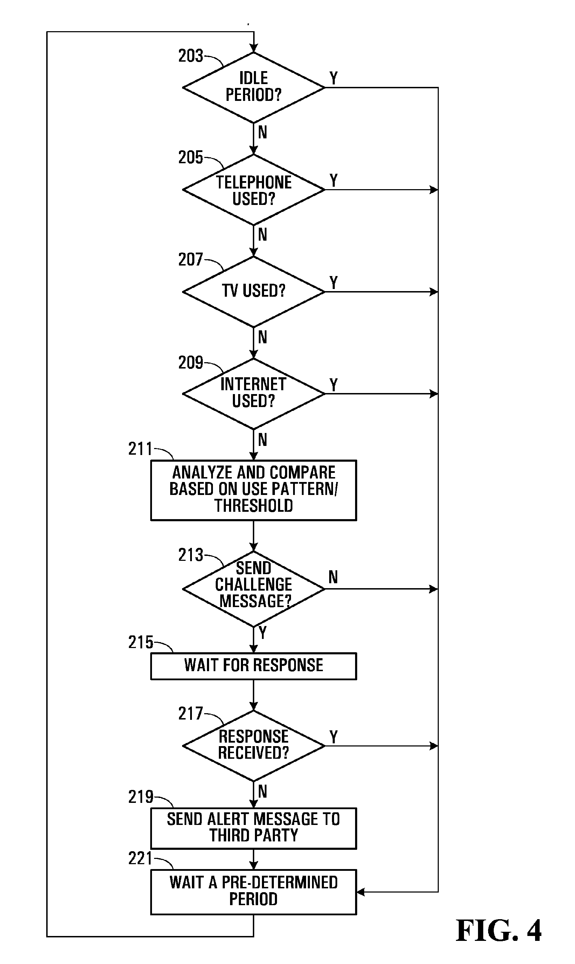

The activity monitoring system 101 may be adapted to operate in any desired manner which may depend on the level of sophistication required, and may range from very simple methodologies to complex methodologies which are based on artificial intelligence. In one basic methodology, the data analyzer 5 periodically checks activity data from one or more sources of a given subscriber premises, and if new activity associated with any of the possible sources has occurred, the data analyzer 5 determines, for example, that no message is required either to the subscriber or another party and waits a predetermined time interval before the next check is made. Alternatively, the data analyzer 5 may determine that the monitoring system 101 is to send a message indicating that a new activity has occurred. On the other hand, if no new activity is detected, the data analyzer 5 may determine that a message, for example, a subscriber response request or an alert message is to be transmitted. An example of this methodology is shown in the flow diagram of Figure 4.

Referring to Figure 4, the data analyzer determines at step 203 whether the present time is within a time period in which no activity by the subscriber or at the customer premises is expected. This period, which may be referred to as an idle period, may be a period at night when the subscriber is expected to be asleep or any other period in which monitoring activity of the subscriber or subscriber premises is not required. If it is determined that the present time is within an idle period, the data analyzer passes to step 221 where it waits for a predetermined period of time before starting the next check procedure at step 203.

If the data analyzer determines that the present time is not within an idle period, it checks whether a subscriber telephone has been used. If the telephone has been used since the last check, the data analyzer determines that subscriber activity has taken place and the process passes again to step 221 in which the analyzer waits a predetermined period of time before starting the next check sequence. If it is determined that the telephone has not been used, the analyzer determines at step 207 whether or not a television has been used since the last check, and if it has, the process passes to step 221. If the TV has not been used, the analyzer checks at step 209 whether or not an internet service has been used since the last check, and if it has, the process passes to step 221 where it waits for a predetermined period of time before starting the next check procedure.

If it is determined that none of the telephone, TV or internet has been used, the analyzer determines at step 211 whether this non-use is normal or expected based on a predetermined use pattern or usage threshold, and at step 213 determines whether or not a response request or challenge message should be sent to the subscriber. If it is determined that the absence of detectable activity is normal and does not warrant transmission of a response request message, the process passes to the wait step 221. If it is determined that a response request message should be sent, an appropriate message or signal is transmitted to the subscriber and the process passes to step 215 which causes the analyzer to wait for the response for a predetermined time. If a response is detected at 217, the process again passes to the wait step 221. However, if a subscriber response is not received within the predetermined wait time defined at step 215, the analyzer determines at step 219 that an alert (or other) message should be transmitted to one or more authorized third parties, and causes the transmitter to send the appropriate messages/signals. Thereafter, the process passes to the wait step 221 where the analyzer waits a predetermined length of time before initiating the next check sequence.

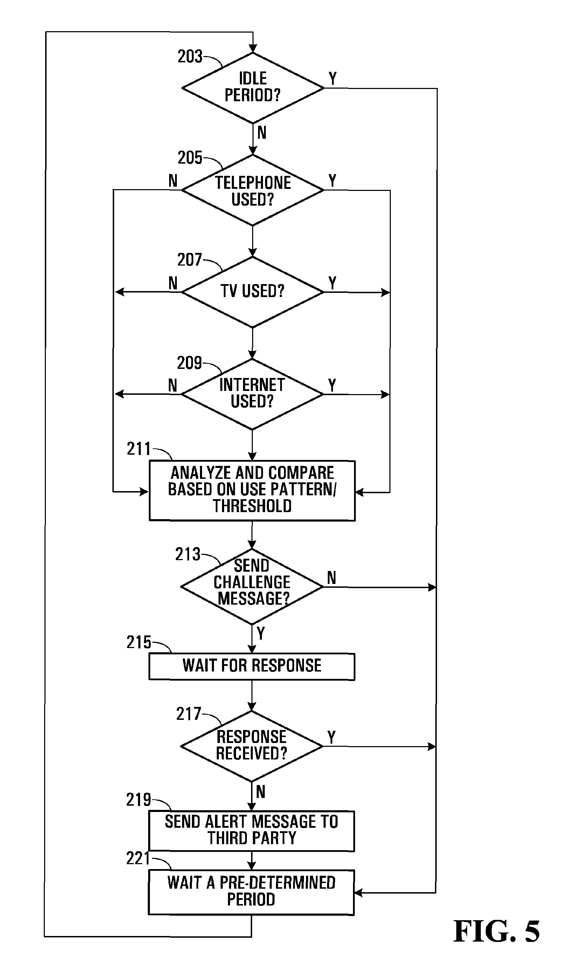

Another example of an activity monitoring process is shown in Figure 5. The monitoring process is similar to that shown in Figure 4 and similar steps are shown by the same reference numerals. The main difference between the monitoring process of Figures 4 and 5 is that in Figure 5 activity associated with each subscriber device is monitored in turn irrespective of whether the answer to the inquiry is yes or no and each result is analyzed. Thus, in this particular embodiment, at each of steps 206, 208 and 210 the system checks whether each of the telephone, TV an internet has been used since the last check and the results are passed to the analyzing step 212. Thus, in comparison to the simpler process of Figure 4, the process of Figure 5 provides more data to the analyzer for learning usage patterns and analyzing and detecting anomalies, deviations or excursions therefrom from which a more accurate determination of the activity of the subscriber can be determined. In addition, detected usage of the telephone, TV, and internet, not only the absence of usage, is compared against expected use patterns or thresholds at 211.

Generally, the data analyzer may check each source of data activity in turn until the last data source has been checked, and if no activity has taken place, a message may be sent. On the other hand, if any of the data sources show activity, the analyzer may determine that no message is required, or that a specific message confirming such activity should be dispatched.

In other embodiments, for the same subscriber premises, the frequency at which one source of data is checked may be different from the frequency at which another source of data is checked and/or, the time at which one source of data is checked may be different from the time at which another source of data is checked. In determining whether or not to send a message at step 213, the data analyzer may use historical data of past use of each device and/or may apply one or more thresholds which may depend on the amount of time that has elapsed since any one or more particular device was used and/or the frequency of detected use and/or the time at which one or a series of checks is made. For example, if the telephone (or other device) has not been used for several days, or the frequency of telephone use has declined or telephone use is not detected at a time it is expected to be used, the data analyzer may determine that a message should be sent.

Embodiments of the activity monitoring system may be adapted to collect and analyze data from any one or more data sources which are indicative of activity of a customer or at a customer premises.

The monitoring system may be adapted to monitor activity within a plurality of customer premises and may either use the same or different activity monitoring methodologies depending on the premises being monitored.

For example, monitoring may be customized specifically to each customer premises depending on for example the level of service required, the possible sources of activity data that are to be monitored and the circumstances under which messages relating to the monitored activity are to be transmitted to selected individuals (or designated receivers).

Advantageously, embodiments of the present invention derive activity data from information which is already used, acquired by and/or available to service and product providers, and therefore allow activity to be monitored unobtrusively and without the need to install special equipment at the customer premises.

Modifications, changes and refinements to the embodiments disclosed herein will be apparent to those skilled in the art.

## Claims

1. A system for monitoring activity at a subscriber location, comprising data receiving means for receiving data accessible to a provider of a product or service to track the provision of said product or service to a subscriber at said location, and
determining means for determining from the data activity at said subscriber location.

2. A system as claimed in claim 1, further comprising signal transmitting means for transmitting a signal for receipt by a signal receiver based on the determined activity.

3. A system as claimed in claim 1 or 2, wherein said provider provides a communications service, and said data is indicative of the times when said service is used at said subscriber location.

4. A system as claimed in claim 3, wherein said provider supplies a telephone communications service and the data is indicative of the times when a telephone is used at said subscriber location.

5. A system as claimed in claim 4, wherein said data is indicative of at least one of the times when the subscriber initiates a call, the times when the subscriber ends a call and the duration of each call.

6. A system as claimed in claim 4 or 5, wherein said data comprises at least one of the times when calls are made to said subscriber location, whether or not the call was answered at the subscriber location and the length of time over which the subscriber telephone rings.

7. A system as claimed in any one of claims 3 to 6, wherein said provider supplies at least one of a public switched telephone service, a Voice Over Internet Protocol (VOIP) service and a wireless telephone service.

8. A system as claimed in claim 3, wherein said provider supplies television services and said data is indicative of times when communication signals are transmitted from said subscriber location to said provider.

9. A system as claimed in claim 8, wherein said television services comprise video over digital subscriber line (DSL) services.

10. A system as claimed in claim 3, wherein said provider is an internet service provider and said data is indicative of times when internet communications signals are transmitted from said subscriber location to said provider.

11. A system as claimed in claim 1 or 2, wherein said provider is a provider of a utility product and said data is indicative of the quantity and time when said quantity of product is supplied to said subscriber location.

12. A system as claimed in any one of claims 1 to 11, wherein said determining means is adapted to provide an indication of at least one of:
(1) no activity at said subscriber location is determined at a predetermined time,
(2) no activity is determined at said subscriber location during a predetermined period of time, and
(3) a determined level of activity is below a predetermined threshold level of activity.

13. A system as claimed in claim 12, further comprising transmitting means adapted to transmit a signal for receipt by a signal receiver in response to said indication from said determining means.

14. A system as claimed in any one of claims 1 to 12, wherein said receiving means comprises data storage means incorporated in said equipment associated with said provider.

15. A system as claimed in claim 14, wherein said equipment comprises at least one of a communications switch, a communications router, a communications hub and a server.

16. A system as claimed in any one of claims 1 to 15, wherein said receiving means is adapted to receive said data relating to at least two different services provided to said subscriber location, and said determining means is adapted to determine from data relating to said at least two services activity at said subscriber location.

17. A system as claimed in claim 16, wherein said at least two services comprise communications services.

18. A system as claimed in any one of claims 1 to 17, wherein said receiving means is adapted to receive data relating to the provision of at least one service and at least one product to said subscriber location, and said determining means is adapted to determine from data relating to at least one product and at least one service activity at said subscriber location.

19. A system as claimed in any one of claims 1 to 18, further comprising data selection means for selecting only predetermined data from said received data and providing the selected data to said determining means.

20. A machine implemented method of monitoring activity at a predetermined subscriber location, comprising the steps of:
receiving data collected by a provider of a product or service for tracking the provision of said product or service by said provider to said subscriber location, and
monitoring physical activity by personnel at said subscriber location based on said data.

21. A method as claimed in claim 20, further comprising determining whether the monitored physical activity meets a predetermined criteria.

22. A method as claimed in claim 21, further comprising transmitting a signal based on a result of said determining step.

23. A method as claimed in claim 20 or 21, wherein said provider provides a communications service, and said data is indicative of the times when said service is used at said subscriber location.

24. A method as claimed in claim 23, wherein said provider supplies a telephone communications service and the data is indicative of the times when a telephone is used at said subscriber location.

25. A method as claimed in claim 24, wherein said data is indicative of at least one of the times when a subscriber initiates a call, the times when a subscriber ends a call and the duration of each call.

26. A method as claimed in claim 24 or 25, wherein said data comprises at least one of the times when calls are made to said subscriber location, whether or not the call was answered at the subscriber location, and the length of time at which the subscriber telephone rings.

27. A method as claimed in any one of claims 23 to 26, wherein said provider supplies at least one of a public switched telephone service, a Voice Over Internet Protocol (VOIP) service and a wireless telephone service.

28. A method as claimed in claim 23, wherein said provider supplies television services and said data is indicative of times when said subscriber transmits communication signals to said provider.

29. A method as claimed in claim 28, wherein said television services comprise video over digital subscriber line (DSL) services.

30. A method as claimed in claim 23, wherein said provider is an internet service provider and said data is indicative of times when internet communications signals are transmitted from said subscriber location to said provider.

31. A method as claimed in claim 20 or 21, wherein said provider is a provider of utility products and said data is indicative of the quantity and time when said quantity of product is supplied to said subscriber location.

32. A method as claimed in any one of claims 20 to 31, wherein said step of receiving data comprises receiving data from data storage means incorporated in equipment of said provider.

33. A method as claimed in claim 32, wherein said equipment comprises at least one of a communications switch, a communications router, a communications hub and a communications server.

34. A method as claimed in any one of claims 20 to 33, wherein said receiving step comprises receiving said data relating to at least two different services provided to said subscriber location, and said monitoring step comprises monitoring activity at said subscriber location based on data relating to said at least two different services.

35. A method as claimed in claim 34, wherein at least two services comprise communications services.

36. A method as claimed in any one of claims 20 to 35, wherein the step of receiving comprises receiving data relating to the provision of at least one service and at least one product to said subscriber location, and the step of monitoring comprises monitoring activity at said subscriber location based on data relating to at least one product and at least one service.

37. A method as claimed in any one of claims 20 to 36, comprising selecting only predetermined data from said received data and monitoring said activity based on the selected data.

38. A method as claimed in any one of claims 20 to 37, wherein the step of receiving comprises receiving data from equipment used by at least two different service providers.

39. A method as claimed in any one of claims 20 to 38, further comprising the step of selecting only predetermined data from data available to said provider, said selected data being that received in said receiving step.

40. A method of monitoring activity at a subscriber location comprising detecting by equipment used by a provider in providing a voice communications service events relating to at least one of voice communications initiated from a voice communication device at said subscriber location and voice communications received by a voice communications device at said subscriber location, and
monitoring physical activity of personnel at said subscriber location based on data indicative of said events.

41. A method as claimed in claim 40, further comprising the step of transmitting data indicative of said events from said provider equipment to monitoring equipment used to monitor said physical activity.

42. A method as claimed in claim 41, wherein said monitoring equipment is operated under the control of a monitoring service provider which is different to said voice communications provider.

43. A method of monitoring activity at a subscriber location comprising detecting events relating to at least one of voice communications initiated from a voice communications device at said subscriber location and voice communications received by a voice communications device at said subscriber location,
determining whether or not the monitored activity meets a predetermined criteria and transmitting a signal based on the result of said determining step to a receiver device authorized by said subscriber to receive said signal.

44. Use of information derived from the detection, by equipment controlled by a provider of a product or service, of use of the product or service by a subscriber to monitor activity at a subscriber location.
